# EUROPÄISCHE PATENTSCHRIFT

(11) **EP 1 712 136 B1**
(45) Veröffentlichungstag und Bekanntmachung des Hinweises auf die Patenterteilung: **03.12.2008**
(21) Anmeldenummer: 06007184.2
(22) Anmeldetag: 05.04.2006
(51) Int. Cl.: A22C 13/00

(54) **Leicht abschälbare Wursthülle auf Cellulosebasis**
Cellulose based easy to peel sausage casing
Envelopes des saucisses à base d'hydrate de cellulose facile à peler

(30) Priorität: 13.04.2005 DE 102005016979
(43) Veröffentlichungstag der Anmeldung: 18.10.2006
(73) Patentinhaber: CaseTech GmbH & Co. KG, 29656 Walsrode (DE)
(72) Erfinder: Blumenberg, Klaus-Dieter, 29664 Walsrode (DE); Henze-Wethkamp, Heinrich, 29664 Walsrode (DE); Neuschulz, Willi, 29683 Bad Fallingbostel (DE)
(74) Vertreter: Polypatent

(56) Entgegenhaltungen:
- EP-A- 0 006 551
- EP-A- 0 109 611
- EP-A- 0 374 624
- EP-A- 0 468 284
- DE-A1- 3 930 834

## Beschreibung

Die Erfindung betrifft eine Wursthülle auf Basis von Cellulosehydrat, die geringe Haftung zum Füllgut aufweist, sowie deren Verwendung.

Wursthüllen, die auf ihrer Innenseite eine Beschichtung zur Verringerung der Haftung zur Wurst aufweisen sind bereits beschrieben worden.

So ist in der EP 0374624 eine schlauchförmige Hülle aus regenerierter Cellulose beschrieben, die auf ihrer inneren Oberfläche einen Überzug zur Verbesserung der Abschälbarkeit aufweist, der aus Polyvinylalkohol und einer wasserlöslichen Carbonsäure, bevorzugt Weinsäure oder Zitronensäure besteht.

In der EP 0180207 ist eine Beschichtungszusammensetzung beansprucht, die zur Behandlung der inneren Oberfläche von nichtfaserigen Nahrungsmittelhüllen aus Cellulose verwendet wird um die Schälbarkeit zu verbessern. Die Beschichtungszusammensetzung umfasst ein Gemisch aus einem anionischen wasserlöslichen Celluloseether wie Carboxymethylcellulose und einem nichtionischen wasserlöslichen Celluloseether sowie als dritten Bestandteil ein Schmiermittel. Das Schmiermittel ist ausgewählt aus der Gruppe, die aus Mineralöl, pflanzlichem Öl, tierischem Öl, Siliconöl, acetylierten Monoglyceriden, Polyoxyethylenmonoestern, Sorbitantrioleat und deren Gemischen besteht.

In der europäischen Patentschrift EP 468 284 sind nichtfaserige Nahrungsmittelhüllen aus regenerierter Cellulose offenbart, welche Beschichtungen aufweisen, welche die Abziehbarkeit der Hülle vom umhüllten Nahrungsmittel verbessern. Die Beschichtungszusammensetzung umfasst eine Mischung aus einem wasserlöslichen Celluloseether wie Carboxymethylcellulose und einem Dextrin. Vorzugsweise enthält eine solche Zusammensetzung auch Lecithin und, um die Herstellung selbsttragender entraffbarer geraffter Stäbe aus der Hülle zu erleichtern, vorzugsweise auch ein Mittel gegen den Faltenverschluss wie z.B. ein Öl sowie ein Tensid.

In der Anmeldung DE 2 227 438 sind gegebenenfalls faserverstärkte schlauchförmige Hüllen auf Cellulosebasis beansprucht, die sich zum Füllen und Verarbeiten von Nahrungsmitteln eignen. Die Hüllen haben auf der Innenseite einen Überzug aus einem homogenen Gemisch von wenigstens zwei Komponenten, wobei eine Komponente aus einem wasserlöslichen Celluloseäther und die zweite Komponente aus einem tierischen oder pflanzlichen Öl, Mineralöl, Siliconöl und/oder einem wasserlöslichen Addukt eines Alkylenoxyds mit einem Fettsäureteilester besteht. Die Hülle lässt sich leicht von den darin verarbeiteten Nahrungsmitteln abstreifen und ablösen.

In der europäischen Patentschrift EP 0 109 611 sind schlauchförmige Wursthüllen auf Basis von Cellulose beschrieben, die gegebenenfalls faserverstärkt sind. Sie sind auf ihrer inneren Oberfläche mit einem Überzug zur Verbesserung der Abschälbarkeit der Hülle vom Füllgut ausgerüstet. Der Überzug umfasst eine homogene Mischung aus wenigstens zwei Komponenten, wobei die erste Komponente aus einem wasserlöslichen Celluloseäther und/oder Stärkeäther und die zweite Komponente aus einem Wachs besteht. Als zusätzliche dritte Komponente kann zusätzlich ein nicht reaktives Siliconöl im Überzug enthalten sein.

In der europäischen Patentschrift EP 0 006 551 sind schlauchförmige Hüllen auf Basis von Cellulosehydrat beansprucht, die leicht abziehbar vom Füllgut sind, mit einem Überzug auf der Innenseite. Der Überzug ist ein Gemenge aus pflanzlichen Ölen und/oder Triglyceridgemischen als erste Komponente und chemisch modifizierter Stärke und/oder teilverseiften Polyvinylalkohol und/oder mikrokristalline Cellulose als zweite Komponente.

Bei den vorstehend genannten Wursthüllen auf Cellulosebasis enthalten die Beschichtungen zur Verbesserung der Abschälbarkeit erhebliche Anteile von wasserlöslichen Substanzen, die wesentlich die leichte Ablösbarkeit von der Wurstmasse bewirken. Vor dem Einfüllen des Brätes werden Kunstdärme aus Cellulosehydrat üblicherweise gewässert, um die Hüllen für den Füllvorgang ausreichend flexibel und gleitfähig zu machen. Dabei werden die wasserlöslichen Anteile der Wursthülle weitgehend herausgelöst und können somit die Abschälbarkeit nicht verbessern.

Es bestand daher die Aufgabe, die Innenbeschichtung von Cellulosefaserdärmen so auszurüsten, dass die verbesserte Abschälbarkeit der Hüllen auch nach der bestimmungsgemäßen Wässerung erhalten bleibt.

Überraschend wurde gefunden, dass die Kombination eines wasserlöslichenr Celluloseethers wie Carboxymethylcellulose mit einem wasserlöslichen Polyvinylalkohol in der Innenbeschichtung derartiger Wursthüllen in synergistischer Weise eine gute Abschälbarkeit vom Brät bewirkt, während die reinen Substanzen als Beschichtungen nur eine geringere Verbesserung der Abschälbarkeit bewirken.

Gegenstand der Erfindung ist daher eine Wursthülle auf Basis von bevorzugt faserverstärktem Cellulosehydrat mit einem Überzug auf der Innenseite zur leichten Abschälbarkeit der Hülle von der Wurst. Der Überzug besteht aus mindestens zwei Bestandteilen, wobei der erste Bestandteil ein wasserlöslicher Polyvinylalkohol ist, bevorzugt aus Polyvinylacetat hergestellt mit einem Verseifungsgrad von mindestens 80 %. Der zweite Bestandteil ist ein wasserlöslicher Celluloseether, bevorzugt Carboxymethylcellulose.

Es hat sich gezeigt, dass der synergistische Effekt der reduzierten Haftung der Hülle an der Wurst besonders ausgeprägt ist, wenn der prozentuale Anteil des wasserlöslichen Celluloseethers, insbesondere Carboxymethylcellulose bezogen auf die Summe der Gewichtsmengen von wasserlöslichem Celluloseether und wasserlöslichem Polyvinylalkohol im Überzug mehr als 50 % beträgt, insbesondere zwischen 60 bis 80 % liegt.

Wasserlöslich im Sinne der vorliegenden Erfindung meint, dass der Celluloseether eine Löslichkeit in Wasser bei 25°C von wenigstens 5 g pro 95 g Wasser und der Polyvinylalkohol eine Löslichkeit in Wasser bei 90°C von wengistens 10 g pro 90 g Wasser besitzt.

In einer bevorzugten Ausführungsform enthält der Überzug auf der Innenseite der Wursthülle als zusätzliche Komponente ein Öl und/oder ein fettähnliches Diketen als Trennmittel zur Vermeidung von Verklebungen der flachgelegten, aufgewickelten oder gerafften Wursthülle und gegebenenfalls als Entschäumer beim Auftragen des Überzuges auf die Wursthülle.

Das Öl ist bevorzugt ein synthetisches Öl, besonders bevorzugt ein Siliconöl, insbesondere bevorzugt Dimethylpolysiloxan. Derartige Siliconöle werden als Emulsionen im Handel beispielsweise von der Fa. Wacker angeboten, wobei erfindungsgemäß insbesondere die Silicon-Antischaum-Emulsion SILFOAM SE2 eingesetzt wird.

Ein geeignetes fettähnliches Diketen im Überzug enthält bevorzugt langkettige Fettsäuren mit 12 bis 20 C-Atomen und ist erfindungsgemäß bevorzugt die anionisch eingestellte wässrige Suspension Aquapel 7320 von der Fa. Hercules.

Die Wursthülle besteht aus einem Schlauch aus regenerierter Cellulose, der vorzugsweise mit einem Faservlies aus Hanffasern verstärkt ist. Die Herstellung von Wursthüllen auf Cellulosebasis, die gegebenenfalls faserverstärkt sind und einen Überzug zur Reduzierung der Bräthaftung aufweisen, erfolgt in an sich bekannter Weise. Dabei wird das Faservlies zum Schlauch geformt, mit Viskose beschichtet, regeneriert, gewaschen und mit Glyzerin als Weichmacher behandelt.

Der erfindungsgemäße Überzug auf der Innenseite der Celluloseregenerathülle wird vorzugsweise vor der Trocknung aufgebracht.

Dabei wird die wässrige Imprägnierlösung in den Celluloseregeneratschlauch eingefüllt und mit einem Abquetschwalzenpaar, durch das der mit Stützluft prall aufgeblasene Schlauch in horizontaler oder vertikaler Laufrichtung kontinuierlich geführt wird, gleichmäßig auf die Innenoberfläche aufgebracht. Anschließend wird die Wursthülle getrocknet, flachgelegt und zu Rollen aufgewickelt, wobei die erfindungsgemäßen Hüllen auch bei längerer Lagerung nicht verkleben und auch dass Wiederbefeuchten für anschließendes Konfektionieren zu füllfertigen, gerafften Schlauchraupen kann vor dem Raffvorgang durchgeführt werden, ohne dass die Hüllen verkleben und sich für den Raffvorgang nur schwer öffnen lassen.

Ein weiterer Gegenstand der Erfindung ist ein Verfahren zur Herstellung der erfindungsgemäßen Wursthüllen.

Das erfindungsgemäße Verfahren umfasst das Aufbringen einer wässrigen Lösung auf die Wursthülleninnenoberfläche enthaltend im Bereich von 0,6 bis 4,0 Gew.-% wasserlöslichen Polyvinylalkohol und 0,1 bis 4,0 Gew.-% wasserlöslichen Celluloseether, wobei die Gew.-% auf die wässrige Lösung bezogen sind.

In weiterer Ausführungsform enthält die wässrige Lösung als zusätzlichen Bestandteil ein Öl und/oder ein fettähnliches Diketen im Bereich von 0,1 bis 2,0 Gew.-%.

Das Öl und/oder fettähnliche Diketen wird in Form einer Emulsion eingesetzt. Bevorzugt ist die Silicon-Antischaum-Emulsion ®SILFOAM SE2 um ein zu starkes Schäumen der Imprägnierlösung beim Auftragen zu vermeiden.

Zusätzlich können Emulgatoren zugesetzt werden, bevorzugt nichtionische Polyethylenglykol-Fettalkoholether, die als ®Brij Typen im Handel erhältlich sind, um ein gleichmäßiges Aufziehen der Imprägnierlösung auf die Celluloseoberfläche zu bewirken.

Ein weiterer Gegenstand der Erfindung ist die Verwendung der Wursthülle für die Herstellung von Brühwurst, Rohwurst, Peperoni und Kochschinken.

### Beispiele

Die Erfindung wird durch die folgenden Beispiele näher erläutert.

Die Zahlenangaben der Substanzen stehen für die Grammangabe der eingesetzten Wirksubstanzmengen in der Imprägnierlösung.

Die. Angabe %-Anteil Carboxymethylcellulose steht für den prozentualen Gewichtsanteil der Carboxymethylcellulose bezogen auf die Summe der Gewichtsanteile von Carboxymethylcellulose und Polyvinylalkohol in der Imprägnierlösung.

Die Carboxymethylcellulose wurde von der Fa. Wolff Cellulosics unter Typbezeichnung ®Walocel CRT 30 GA bezogen und als 5 Gew. % wässrige Lösung eingesetzt. Der Polyvinylalkohol ®Mowiol Type 28-99 von Fa. Clariant wurde als 10 Gew. % wässrige Lösung eingesetzt. Das handelsübliche Glycerin wurde auf 90 Gew. % mit Wasser verdünnt. Die Emulsion ®Silfoam SE 2 der Fa. Wacker Silicones hat einen Aktivgehalt von 20 Gew. % und wurde für die Beispiele 1 bis 8 auf 2 Gew. % und für die Beispiele 9 bis 17 auf 10 Gew. % verdünnt. Das fettähnliche Diketen ®Aquapel 7320 der Fa. Hercules hat einen Wirkstoffgehalt von 20 Gew. % und wurde unverdünnt eingesetzt. Der Emulgator Polyoxyethylen-20-cetylether ®Brij 58 der Fa. ICI wurde als 10 Gew.% wässrige Lösung eingesetzt.

Die Wursthüllen der Beispiele wurden nach vorstehend beschriebenem Verfahren hergestellt, die Beispiele 1 bis 8 im Nennkaliber 94 und die Beispiele 9 bis 18 im Nennkaliber 55. Aus den fertiggestellten Wursthüllen wurden Würste vom Brühwursttyp hergestellt, wobei die Hüllen vor dem Füllen mit Brät bestimmungsgemäß 30 Minuten in handwarmen fließendem Wasser gewässert wurden. Nach 2 Tagen wurde ihre Schälbarkeit beurteilt. In einer Skala von 0 bis 5 zunehmender Haftung der Wursthülle an der Wurst erfolgte die Bewertung der Bräthaftung.

### Beispiele 1- 8

Die Beispiele 1 bis 8 belegen den synergistischen Effekt beim großen Nennkaliber 94, wobei bei Beispiel 1 nur die Carboxymethylcellulose und bei Beispiel 8 nur der Polyvinylalkohol enthalten ist und die Bräthaftung jeweils höher ist als bei den Mischungen der beiden Komponenten wie insbesondere erkennbar bei den Beispielen 3 und 4.

| **1** | **2** | **3** | **4** | **5** | **6** | **7** | **8** | **Substanzen in der Imprägnierlösung** |
|---|---|---|---|---|---|---|---|---|
| 20 | 420 | 620 | 820 | 1020 | 1220 | 1620 | 2020 | Wasser |
| 4000 | 3200 | 2800 | 2400 | 2000 | 1600 | 800 | 0 | ®Walocel CRT 30 GA |
| 0 | 400 | 600 | 800 | 1000 | 1200 | 1600 | 2000 | ®Mowiol Type 28-99 |
| 880 | 880 | 880 | 880 | 880 | 880 | 880 | 880 | Glycerin |
| 100 | 100 | 100 | 100 | 100 | 100 | 100 | 100 | ®Silfoam SE 2 |
| 100 | 80 | 70 | 60 | 50 | 40 | 20 | 0 | **%-Anteil Carboxymethylcellulose** |
| 1,0 | 1,0 | 0,75 | 0,75 | 1,0 | 1,0 | 1,0 | 2,0 | **Bräthaftung** |

### Beispiele 9-17

Die Beispiele 9 bis 17 zeigen wiederum den synergistischen Effekt beim kleineren Nennkaliber 55, wobei hier ein zusätzlicher Emulgator und ein höherer Gehalt der Siliconölemulsion eingesetzt wurden. Bei Beispiel 9 ist nur die Carboxymethylcellulose und bei Beispiel 17 nur der Polyvinylalkohol enthalten und die Bräthaftung ist jeweils höher ist als bei den Mischungen der beiden Komponenten wie insbesondere erkennbar bei den Beispielen 11 bis 14.

| **9** | **10** | **11** | **12** | **13** | **14** | **15** | **16** | **17** | **Substanzen in der Imprägnierlösung** |
|---|---|---|---|---|---|---|---|---|---|
| 470 | 770 | 920 | 1070 | 1220 | 1370 | 1670 | 1920 | 1970 | Wasser |
| 3000 | 2400 | 2100 | 1800 | 1500 | 1200 | 600 | 100 | 0 | ®Walocel CRT 30 GA |
| 150 | 150 | 150 | 150 | 150 | 150 | 150 | 150 | 150 | ®Brij 58 |
| 0 | 300 | 450 | 600 | 750 | 900 | 1200 | 1450 | 1500 | ®Mowiol Type 28-99 |
| 880 | 880 | 880 | 880 | 880 | 880 | 880 | 880 | 880 | Glycerin |
| 500 | 500 | 500 | 500 | 500 | 500 | 500 | 500 | 500 | ®Silfoam SE 2 |
| 100 | 80 | 70 | 60 | 50 | 40 | 20 | 3,3 | 0 | **%-Anteil Carboxy methylcellulose** |
| 1,5 | 1,0 | 0,75 | 0,75 | 0,75 | 0,6 | 1,0 | 1,25 | 1,75 | **Bräthaftung** |

### Beispiel 18

In diesem Beispiel wurde als Trennmittel ®Aquapel 7320 eingesetzt.

| **18** | **Substanzen in der Imprägnierlösung** |
|---|---|
| 2170 | Wasser |
| 100 | ®Walocel CRT 30 GA |
| 150 | ®Brij 58 |
| 1450 | ®Mowiol Type 28-99 |
| 880 | Glycerin |
| 250 | ®Aquapel 7320 |
| 3,3 | **%-Anteil Carboxymethylcellulose** |
| 1,5 | **Bräthaftung** |

## Patentansprüche

1. Schlauchförmige Wursthülle auf Basis von Cellulosehydrat mit einem Überzug auf der Innenseite, **dadurch gekennzeichnet, dass** der Überzug mindestens zwei Bestandteile enthält, wobei der erste Bestandteil ein wasserlöslicher Polyvinylalkohol und der zweite Bestandteil ein wasserlöslicher Celluloseether ist, und der prozentuale Anteil des wasserlöslichen Celluloseethers, bezogen auf die Summe der Gewichtsmengen an wasserlöslichem Celluloseether und wasserlöslichem Polyvinylalkohol im Überzug mehr als 50 %, bevorzugt 60 bis 80 %, beträgt.

2. Wursthülle nach Anspruch 1, **dadurch gekennzeichnet, dass** als zusätzlicher Bestandteil ein Öl und/oder ein fettähnliches Diketen im Überzug enthalten ist.

3. Wursthülle nach Anspruch 1 oder 2, **dadurch gekennzeichnet, dass** der wasserlösliche Polyvinylalkohol ein Polyvinylacetat mit einem Verseifungsgrad von mindestens 80 % ist.

4. Wursthülle nach einem der Ansprüche 1 bis 3, **dadurch gekennzeichnet, dass** der wasserlösliche Celluloseether Carboxymethylcellulose ist.

5. Wursthülle nach einem der Ansprüche 2 bis 4, **dadurch gekennzeichnet, dass** das Öl im Überzug ein vollsynthetisches Öl, bevorzugt Siliconöl, ist.

6. Wursthülle nach einem der Ansprüche 2 bis 5, **dadurch gekennzeichnet, dass** das fettähnliche Diketen bevorzugt langkettige (C₁₂-C₂₀)-Fettsäuren enthält.

7. Wursthülle nach Anspruch 5, **dadurch gekennzeichnet, dass** die Gewichtsmenge des Siliconöls im Überzug kleiner ist als die Summe der Gewichtsmengen von Carboxymethylcellulose und Polyvinylalkohol.

8. Wursthülle nach einem der Ansprüche 1 bis 7, **dadurch gekennzeichnet, dass** der Überzug ein Flächengewicht von bevorzugt 80 bis 560 mg/m², besonders bevorzugt 160 bis 480 mg/m², aufweist.

9. Wursthülle nach einem der Ansprüche 1 bis 8, **dadurch gekennzeichnet, dass** sie eine Faserverstärkung aufweist.

10. Verfahren zur Herstellung von Wursthüllen nach einem der Ansprüche 1 bis 9, **dadurch gekennzeichnet, dass** man auf die Innenseite eines Schlauches auf Basis von Cellulosehydrat eine wässrige Lösung aufbringt, die im Bereich von 0,6 bis 4,0 Gew.-% Polyvinylalkohol und 0,1 bis 4,0 Gew.-% Carboxymethylcellulose enthält.

11. Verfahren gemäß Anspruch 10, **dadurch gekennzeichnet, dass** die wässrige Lösung als zusätzlichen Bestandteil ein Öl und/oder ein fettähnliches Diketen im Bereich von 0,1 bis 2,0 Gew.-% enthält.

12. Verfahren zur Herstellung von Wursthüllen nach Anspruch 10 oder 11, **dadurch gekennzeichnet, dass** die wässrige Lösung Emulgatoren enthält.

13. Verwendung der Wursthülle nach den Ansprüchen 1 bis 9 für die Herstellung von Brühwurst, Rohwurst, Peperoni und Kochschinken.

## Claims

1. Tubular sausage casing based on cellulose hydrate with a coating on the inside, **characterized in that** the coating contains at least two constituents, the first constituent being a water-soluble polyvinyl alcohol and the second constituent being a water-soluble cellulose ether, and the percentage proportion of the water-soluble cellulose ether, based on the sum of the quantities by weight of water-soluble cellulose ether and water-soluble polyvinyl alcohol in the coating, being more than 50%, preferably 60 to 80%.

2. Sausage casing according to Claim 1, **characterized in that** an oil and/or a fat-like diketene is contained in the coating as an additional constituent.

3. Sausage casing according to Claim 1 or 2, **characterized in that** the water-soluble polyvinyl alcohol is a polyvinyl acetate with a level of saponification of at least 80%.

4. Sausage casing according to one of Claims 1 to 3, **characterized in that** the water-soluble cellulose ether is carboxymethyl cellulose.

5. Sausage casing according to one of Claims 2 to 4, **characterized in that** the oil in the coating is a fully synthetic oil, preferably silicone oil.

6. Sausage casing according to one of Claims 2 to 5, **characterized in that** the fat-like diketene preferably contains long-chain (C₁₂-C₂₀) fatty acids.

7. Sausage casing according to Claim 5, **characterized in that** the amount by weight of the silicone oil in the coating is less than the sum of the amounts by weight of carboxymethyl cellulose and polyvinyl alcohol.

8. Sausage casing according to one of Claims 1 to 7, **characterized in that** the coating has a weight per unit area of preferably 80 to 560 mg/m², particularly preferably 160 to 480 mg/m².

9. Sausage casing according to one of Claims 1 to 8, **characterized in that** it has a fibre reinforcement.

10. Method for producing sausage casings according to one of Claims 1 to 9, **characterized in that** an aqueous solution which contains of the order of 0.6 to 4.0% by weight of polyvinyl alcohol and 0.1 to 4.0% by weight of carboxymethyl cellulose is applied to the inside of a tube made of cellulose hydrate.

11. Method according to Claim 10, **characterized in that** the aqueous solution contains an oil and/or a fat-like diketene in the range from 0.1 to 2.0% by weight as an additional constituent.

12. Method for producing sausage casings according to Claim 10 or 11, **characterized in that** the aqueous solution contains emulsifiers.

13. Use of the sausage casing according to Claims 1 to 9 for the production of Brühwurst, Rohwurst, pepperoni and cooked ham.

## Revendications

1. Enveloppe de saucisse tubulaire à base d'hydrate de cellulose avec un revêtement sur la face interne, **caractérisée en ce que** le revêtement contient au moins deux constituants, dans lequel le premier constituant est un poly(alcool de vinyle) hydrosoluble et le second constituant est un éther de cellulose hydrosoluble, et **en ce que** la proportion, exprimée en pourcentage, de l'éther de cellulose hydrosoluble, par rapport à la somme des quantités en poids d'éther de cellulose hydrosoluble et de poly(alcool de vinyle) hydrosoluble dans le revêtement, est supérieure à 50 %, de préférence de 60 à 80 %.

2. Enveloppe de saucisse selon la revendication 1, **caractérisée en ce que** le revêtement contient, comme constituant supplémentaire, une huile et/ou un dicétène lipoïdique.

3. Enveloppe de saucisse selon la revendication 1 ou 2, **caractérisée en ce que** le poly(alcool de vinyle) hydrosoluble est un poly(acétate de vinyle) avec un degré de saponification d'au moins 80 %.

4. Enveloppe de saucisse selon l'une quelconque des revendications 1 à 3, **caractérisée en ce que** l'éther de cellulose hydrosoluble est la carboxyméthylcellulose.

5. Enveloppe de saucisse selon l'une quelconque des revendications 2 à 4, **caractérisée en ce que** l'huile dans le revêtement est une huile entièrement synthétique, de préférence de l'huile de silicone.

6. Enveloppe de saucisse selon l'une quelconque des revendications 2 à 5, **caractérisée en ce que** le dicétène lipoïdique contient de préférence des acides gras en (C₁₂-C₂₀) à longue chaîne.

7. Enveloppe de saucisse selon la revendication 5, **caractérisée en ce que** la quantité en poids d'huile de silicone dans le revêtement est inférieure à la somme des quantités en poids de carboxyméthylcellulose et de poly(alcool de vinyle).

8. Enveloppe de saucisse selon l'une quelconque des revendications 1 à 7, **caractérisée en ce que** le revêtement présente un poids par unité de surface de préférence de 80 à 560 mg/m², mieux encore de 160 à 480 mg/m².

9. Enveloppe de saucisse selon l'une quelconque des revendications 1 à 8, **caractérisée en ce qu'**elle présente un renforcement par des fibres.

10. Procédé de fabrication d'enveloppes de saucisse selon l'une quelconque des revendications 1 à 9, **caractérisé en ce que** l'on applique sur la face interne d'un tube à base d'hydrate de cellulose une solution aqueuse qui contient dans la plage de 0,6 à 4,0 % en poids de poly(alcool de vinyle) et de 0,1 à 4,0 % en poids de carboxyméthylcellulose.

11. Procédé selon la revendication 10, **caractérisé en ce que** la solution aqueuse contient, comme constituant supplémentaire, une huile et/ou un dicétène lipoïdique dans la plage de 0,1 à 2,0 % en poids.

12. Procédé de fabrication d'enveloppes de saucisse selon la revendication 10 ou 11, **caractérisé en ce que** la solution aqueuse contient des émulsionnants.

13. Utilisation de l'enveloppe de saucisse selon les revendications 1 à 9 pour la fabrication de saucisses à cuire par pochage, de saucisses brutes, de peperoni et de jambon cuit.
